# EUROPÄISCHE PATENTSCHRIFT

(11) **EP 0 749 283 B1**
(45) Veröffentlichungstag und Bekanntmachung des Hinweises auf die Patenterteilung: **06.05.1998**
(21) Anmeldenummer: 95910545.3
(22) Anmeldetag: 02.03.1995
(51) Int. Cl.: A47J 31/36, A47J 31/06

(54) **TOPFFÖRMIGER DAUERFILTEREINSATZ**
POT-SHAPED PERMANENT FILTER CARTRIDGE
CARTOUCHE FILTRANTE DURABLE EN FORME DE POT

(30) Priorität: 03.03.1994 DE 9403616 U
(43) Veröffentlichungstag der Anmeldung: 27.12.1996
(73) Patentinhaber: Braun Aktiengesellschaft, Frankfurt am Main (DE); MAXS AG, CH-6072 Sachseln (CH)
(72) Erfinder: SCHAMBERG, Stefan, D-61250 Usingen (DE); MILTENBERGER, Christof, D-61389 Schmitten (DE); GASSER, Ruedy, CH-6078 Bürglen (CH); STUMVOLL, Ernst, CH-6060 Sarnen (CH)
(86) Internationale Anmeldenummer: EP9500770
(87) Internationale Veröffentlichungsnummer: WO9523544

(56) Entgegenhaltungen:
- EP-A- 0 124 473
- EP-A- 0 465 877

## Beschreibung

Die Erfindung bezieht sich auf einen topfförmigen, das Espressomehl in einer Brühkammer aufnehmenden Dauerfiltereinsatz für eine Haushaltsespressomaschine, der an seinem Boden eine siebförmige Filtergrundplatte mit Sieblöchern aufweist und der in einem Siebkorbträger einsetzbar ist, aus welchem das Espressogetränk über die Sieblöcher abfließen kann und mit einer in Fließrichtung des Espressogetränks der Filtergrundplatte nachgeschalteten Trägerplatte, die mit der Filtergrundplatte zur besseren Cremaerzeugung eine Druckkammer bildet, durch die das Espressogetränk hindurchfließen muß, bevor es am Siebkorbträger austreten kann, wobei die Druckerzeugung in der Druckkammer durch ein an ihrem Ausgang angebrachtes, den Strömungswiderstand erhöhendes Mittel bewirkt wird.

Insbesondere bei Espressomaschinen werden topfförmige Dauerfiltereinsätze verwendet, die vorzugsweise aus Stahl bestehen und vorzugsweise in einem Tiefziehverfahren hergestellt werden. Anschließend wird der Topfboden durch in diesen eindringende Spitzen perforiert, so daß Filteröffnungen entstehen. Durch den Perforationsvorgang wird ein Grat aufgeworfen, der in einem anschließenden Schleifvorgang beseitigt werden muß. Bei diesem Herstellungsverfahren sind die Filteröffnungen sehr unregelmäßig, wodurch die jeweiligen Dauerfiltereinsätze unterschiedliche Eigenschaften aufweisen und der hergestellte Espresso in seiner Konsistenz stark variieren kann. Um Siebe mit einer genaueren und feineren Struktur der Sieblöcher herzustellen, wird auch ein in der Praxis seit langem bekanntes Ätzverfahren angewendet.

Aus der EP-A-0 459 323 ist weiterhin ein topfförmiger Dauerfiltereinsatz für eine Haushaltsespressomaschine der eingangs beschriebenen Art bekannt. Im Boden des Siebkorbträgers, der in einer oberhalb des Dauerfiltereinsatzes angeordneten Brüheinrichtung der Haushaltsespressomaschine (nicht dargestellt) befestigbar ist, liegt unterhalb des eigentlichen Dauerfiltereinsatzes eine Trageplatte mit einer zentralen Öffnung auf. Am radial äußeren Rand ist an der Oberseite der Trageplatte ein Dichtring befestigt, der als Auflage für den topfförmigen Dauerfiltereinsatz mit am Boden ausgebildeten Sieblöchern dient. Zwischen dem Boden des Dauerfiltereinsatzes und der Trageplatte ist ein Druckraum vorhanden, in den das von der Brühkammer des Dauerfiltereinsatzes über das Sieb abfließende Brühgetränk gesammelt und der Öffnung der Trageplatte zugeführt wird.

Der Ausgang der Öffnung wird von einer federnden Blechzunge verschlossen, die seitlich an der Unterseite der Trageplatte befestigt ist und die als das den Strömungswiderstand erhöhende Mittel, nämlich als sogenanntes "Cremaventil", dient. Im Betrieb der Espressomaschine wird dann unter Druck das Wasser durch das in der Brühkammer befindliche Espressomehl durchgedrückt und über die Sieböffnungen der Filtergrundplatte in die zwischen der Filtergrundplatte und der Trägerplatte ausgebildete Druckkammer eingeleitet, von wo es zur Öffnung gelangt. Der dabei an der Schließfläche auf die Blechzunge einwirkende Druck des Espressogetränks übt auf die Blechzunge eine derartige Öffnungskraft aus, die, wenn sie größer ist als die Schließkraft der Blechzunge, ein Abheben dieser unter Vergrößerung der Vorspannkraft von der Öffnung bewirkt. Erst dann kann das Espressogetränk unter Bildung von Crema am Ventil abfließen.

Im Betrieb muß der Boden des topfförmigen Dauerfiltereinsatzes, also die Filtergrundplatte, zur Bildung einer nach den Seiten geschlossenen Druckkammer fest gegen die an der Trägerplatte befestigte Ringdichtung gedrückt werden. Eine druckdichte Abdichtung ist aber nur dann möglich, wenn der Dauerfiltereinsatz beim Verriegeln des Siebkorbträgers am Brühkopf einer Espressomaschine von diesem fest nach unten gedrückt und wenn dabei der untere Randbereich des Dauerfiltereinsatzes dichtend gegen die Ringdichtung gepreßt wird. Andererseits muß die Ringdichtung auch noch radial nach außen gegen die Wandung des Siebkorbträgers druckdicht angepreßt werden, wenn nur an der Öffnung des Cremaventils und nicht seitlich vorbei das Espressogetränk abfließen soll. Hierzu ist am radial äußeren Rand der Ringdichtung eine zusätzliche Dichtlippe vorgesehen, die an der Zylinderbohrung des Siebkorbträgers druckdicht anliegt.

Abgesehen von den zahlreichen Dichtstellen, die leicht zu Undichtigkeiten der zwischen der Filtergrundplatte und der Trägerplatte ausgebildeten Druckkammer führen können, kann diese Ausführungsform des Dauerfiltereinsatzes mit nachgeschalteter Druckkammer nicht bei denjenigen Espressomaschinen angewendet werden, bei denen der Brühkopf von einem bewegbaren Kolben gebildet wird, der zur Bildung einer Brühkammer in den topfförmigen Dauerfiltereinsatz dichtend einfährt. Denn bei dieser Ausführungsform wird nicht der topfförmige Dauerfiltereinsatz mit Hilfe des Siebkorbträgers gegen den feststehenden Brühkopf dichtend gedrückt, sondern der Brühkopf taucht selbst zur Bildung einer Brühkammer in den Dauerfiltereinsatz gleitend ein und dichtet diese zur Bildung der Brühkammer nach oben hin ab. Dies bedeutet letztendlich, daß der Dauerfiltereinsatz keine in Fließrichtung des Espressogetränkes gerichtete Andrückkraft erfährt, so daß dieser auch nicht nach unten gegen die oben beschriebene Ringdichtung dichtend gedrückt wird.

Bei der Ausführungsform des Dauerfiltereinsatzes nach der EP-A-0 459 323 ist es auch als weniger vorteilhaft anzusehen, daß das Cremaventil von einem Überdruckventil gebildet wird, das in Abhängigkeit der Vorspannung der Federzunge erst ab einem bestimmten Flüssigkeitsdruck öffnet. Da aber in Abhängigkeit des Mahlgrades des Espressomehls einerseits und des schwankenden Pumpendrucks andererseits unterschiedliche Drücke an der Öffnung des Cremaventils auftreten - und dies deshalb, da beim Durchdringen des heißen Wassers durch das Espressomehl der Druck vom Brühkopf zur Öffnung hin abnimmt - muß die Vorspannkraft der Federzunge so ausgelegt sein, daß auch im ungünstigsten Falle das Cremaventil öffnet, also dann, wenn der Mahlgrad des Espressomehls sehr fein und der Pumpendruck aufgrund von unvermeidbaren Herstelltoleranzen verhältnismäßig niedrig ist. Dies führt letztendlich dazu, daß das Cremaventil, also die Vorspannung der Federzunge in Abhängigkeit des Querschnitts der Öffnung, so ausgelegt sein muß, daß dieses bereits bei einem verhältnismäßig geringen Druck öffnet, was die Cremabildung nicht unbedingt fördert. Eine Cremaabnahme verstärkt sich noch dadurch, daß, je höher der Druck am Cremaventil wird, desto mehr muß sich die Federzunge aufbiegen und desto mehr vergrößert sich der Öffnungsquerschnitt, was wiederum zur Folge hat, daß sich der Druckabfall am Cremaventil verringert.

Weiterhin werden von der Firma M. Schaerer A.G., Quellenweg 4 - 6, CH-3084 Wabern (Kanton Bern), Schweiz, Getränkeautomaten, die nicht für den häuslichen Bedarf geeignet sind, hergestellt und vertrieben. Diese Getränkeautomaten können unter vielen angebotenen Getränken auch ein Espressogetränk zubereiten. Bei diesen Automaten besteht der zum Zubereiten eines Espressogetränks dienende Maschinenteil aus einem zylindrischen Gehäuse, in dem ein axial beweglicher Arbeitskolben gelagert ist (siehe hierzu insbesondere den Getränkeautomat nach der EP-A-0 073 739). Der Boden des Gehäuses wird dabei von einem Schieber gebildet, der beim Brühvorgang einerseits die vom Gehäuse und dem Kolben gebildete Brühkammer verschließt und der zum Auswerten des Kaffeepulverkuchens nach dem Brühvorgang andererseits die Auslaßöffnung freigibt.

Während bei dem Getränkeautomat nach der EP-A-0 073 739 seitlich am zylindrischen Gehäuse am Ende der Brühkammer eine Öffnung ausgebildet ist, in der eine Filtergrundplatte mit Sieblöchern und ein der Filtergrundplatte nachgeschaltetes Überdruckventil als Auslaßventil eingesetzt ist, gibt es auch einen von der Firma Schaerer vertriebenen Getränkeautomat gleichen Aufbaus, bei dem allerdings die Filtergrundplatte nicht seitlich in der zylindrischen Bohrung des Gehäuses, sondern direkt im Schieber aufgenommen ist. Dabei ist der Filtergrundplatte eine Trägerplatte nachgeschaltet, die mit dieser eine Druckkammer bildet. In der Trägerplatte ist eine Metallscheibe mit einem den Strömungswiderstand erhöhenden Mittel, nämlich einer im Durchmesser kleinen Bohrung, ausgebildet. Ein derartiger Automat ist nicht auf Haushaltsespressomaschinen anwendbar, da hier ganz andere Verhältnisse, wie Wasserdruck, Wassertemperatur, Kaffeemehlqualität sowie andere Handhabungsgegebenheiten vorhanden sind.

Aufgabe der Erfindung ist es nun, einen topfförmigen Dauerfiltereinsatz für eine Haushaltsespressomaschine zu schaffen, der leicht und kostengünstig herstellbar ist, der leicht handhabbar, insbesondere leicht befüllbar und reinigbar ist, der universell einsetzbar ist und der dennoch ein gutes Cremaergebnis für ein Espressogetränk erzielt. Gleichzeitig sollen auch gute Ergebnisse bei der Herstellung eines Kaffeegetränks mit dem Dauerfiltereinsatz erreicht werden.

Diese Aufgabe wird erfindungsgemäß durch die kennzeichnenden Merkmale des Patentanspruchs 1 gelöst.

Durch die mechanische Verbindung des Dauerfiltereinsatzes mit der Druckkammer ergibt sich ein einteiliger Dauerfiltereinsatz, der nur insgesamt aus dem Siebkorbträger herausgenommen werden kann und somit die Bauteile nicht verlorengehen können. Die Einteiligkeit sorgt für eine absolute Dichtheit zwischen der Brühkammer und der nachgeschalteten Druckkammer, so daß ein dauerhafter Dauerfiltereinsatz entsteht, der sowohl in seiner Funktion wie in seinem Ergebnis gute Werte hinsichtlich eines Kaffee- oder Espressogetränks erzielt. Dabei wird der Gesamtquerschnitt der am Ausgang der Druckkammer ausgebildeten Öffnung (bzw. Öffnungen) zu dem Gesamtquerschnitt der an die Druckkammer angrenzenden Sieblöcher so klein gewählt, daß bei geringeren Wasserdrücken ein guter Kaffee (ca. 0,5 bar) oder ein guter French-Press (Kaffee mit Schäumchen) (ca. 3,5 bar) und bei höheren Wasserdrücken (ca. 10 bar) ein guter Espresso mit einer starken Cremabildung erreicht wird, d.h., je höher der Druck, desto stärker die Cremabildung, was sich insbesondere aufgrund der Geschwindigkeitserhöhung in der Öffnung sowie dem dort eintretenden Druckabfall ergibt. Dabei sollte eine Brühtemperatur von ca. 94° C für alle Getränkearten eingehalten werden. Des weiteren bietet diese Erfindung den Vorteil, daß durch den verwendeten Dauerfiltereinsatz genau definierte Filtervorgänge stattfinden, die nicht durch Unregelmäßigkeiten, z.B. Mahl- und Stopfgrad des Kaffee- bzw. Espressomehls, beeinflußt werden. Allein durch die Veränderung des Wasserdruckes ist es also mit dem erfindungsgemäßen Dauerfiltereinsatz auch möglich, sowohl Espresso (hoher Druck), wie einen guten Kaffee (niedriger Druck) herzustellen. Günstig ist es auch, wenn die Austragsstelle im wesentlichen mittig zur Filtergrundplatte angeordnet ist. Dadurch kann eine im wesentlichen symmetrische Zuströmung erreicht werden.

Nach den Merkmalen des Anspruchs 2 lassen sich die Filtergrundplatte mit der Trägerplatte besonders einfach am Kragen befestigen, wobei letzterer bei größerem Durchmesser auch eine große Fläche der Filtergrundplatte und somit auch eine große Fläche der Druckkammer ermöglicht, wodurch ein schnelleres Einfließen in die Druckkammer aber dafür ein langsameres Abfließen aus der Druckkammer erreicht wird (Druckaufbau in der Druckkammer).

Insbesondere durch Spritzgießen (Anspruch 3) läßt sich eine innige, dichte und sehr leicht herzustellende Verbindung zwischen diesen Teilen herstellen, so daß schließlich für den Hausgebrauch ein Dauerfiltereinsatz entsteht, der leicht herzustellen, einfach reinigbar und dauerhaltbar ist.

Damit auch möglichst kompliziert verlaufende Aufnahmekanäle ausgebildet werden können und gleichzeitig beim Spritzvorgang die Trägerplatte wie deren Befestigung an der Filtergrundplatte in einem einzigen Arbeitsvorgang hergestellt wird, besteht die Trägerscheibe bevorzugt aus Kunststoff. Dabei ist die Filtergrundplatte aus dünnem, mit Sieblöchern versehenen Edelstahlblech hergestellt. Die Filtergrundplatte und die Trägerscheibe können aber auch von einem diese halternden Kunststoffrahmen umgeben sein (Anspruch 4). Die Filtergrundplatte und die Trägerscheibe können dann getrennt hergestellt und durch den Rahmen mittels Spritzgießen aneinander gefügt werden (Anspruch 5).

Damit eine bessere und dauerhaltbarere Anbringung des Rahmens an der Filtergrundplatte gewährleistet ist, ist am Randbereich der Filtergrundplatte mindestens eine Halteöffnung angeordnet, in die ein Haltebereich des Rahmens im wesentlichen paßgenau eingreift (Anspruch 6). Bei angespritztem Rahmen oder beim gleichzeitigen Spritzen von Rahmen und Trägerplatte fließt dann während des Spritzgußvorganges Kunststoffmasse in die Halteöffnung, wodurch die Filtergrundplatte in ihrer Position fixiert und gehaltert wird. Bei einer weiteren Ausführungsform kann ebenfalls im inneren Randbereich des Kragens mindestens eine Verankerungsöffnung angeordnet sein, in die ein Verankerungsbereich des Rahmens im wesentlichen paßgenau eingreift. Dadurch ist auch eine genaue Anhaftung des Rahmens am Kragen der Topfwandung gegeben. Spritzgußtechnisch lassen sich der Kragen und die Filtergrundplatte insbesondere dann miteinander verbinden, wenn die Halteöffnungen der Filtergrundplatte und die Verankerungsöffnungen des Kragens im wesentlichen zueinander fluchtend angeordnet sind. Der Halte- und der Verankerungsbereich des Rahmens werden dann ebenfalls übereinander angeordnet und Positionieren gemeinsam den Kragen und die Filtergrundplatte im wesentlichen paßgenau zueinander.

Die Topfwandung und der Kragen können einteilig aus Metall, bevorzugt Edelstahl, bestehen, wobei der Kragen in den Kunststoffrahmen eingreift (Anspruch 7). Topfwandung, Filtergrundplatte und Trägerscheibe können somit durch einen einzigen Spritzgußvorgang miteinander bzw. auch gleichzeitig mit dem Kragen verbunden werden, während die Topfwandung und der Kragen zuvor als Tiefziehteil geformt wurden.

Es ist in einer weiteren Ausführungsform aber auch möglich, daß die Topfwandung, der Kragen und der Rahmen einteilig aus Kunststoff bestehend ausgebildet sind (Anspruch 8). Bei diesem Verfahren muß die Topfwandung nicht separat hergestellt werden, sondern kann mit dem Rahmen in einem Verfahrensschritt an die Filtergrundplatte und Trägerplatte angespritzt werden. Eine derartige Anordnung ist leicht, einfach herzustellen und daher auch äußerst billig bei ausreichend guter Funktionstüchtigkeit.

Um den Strömungsverhältnissen an der Austragsstelle gerecht zu werden, ist in die Trägerscheibe eine Metallscheibe eingesetzt, die aus einem Siebblech besteht (Anspruch 9). Das Siebblech als Öffnung ist sehr preiswert herstellbar und die Cremabildung kann hierdurch erheblich verbessert werden. Auch läßt sich das Sieb an ihrem Rand leicht mit der aus Kunststoff hergestellten Trägerplatte verbinden, denn es können die Sieblöcher oder zusätzliche am Sieb angebrachte Schlitze als Befestigungsmittel dienen, wenn diese von Kunststoff durchspritzt werden. Es ist aber auch durchaus möglich, auch die Öffnung bzw. die Öffnungen gleich mit in die aus Kunststoff hergestellte Trägerplatte einzuformen.

Für eine gute Cremabildung dürfen der oder die Öffnungen an der Metallscheibe nicht größer als 0,6 mm², vorzugsweise 0,4 mm², betragen (Anspruch 10).

Besonders vorteilhaft für eine Cremabildung wirkt sich auch eine Dicke der Metallscheibe von 0,2 bis 0,6 mm, vorzugsweise 0,4 mm aus (Anspruch 11). Wird die Scheibe dicker, so läßt erfindungsgemäß die Cremabildung wieder nach, weil der Abstand des Ein- und Auslaufs an der oder den Öffnungen immer größer wird und dadurch eine schlagartige Druckentspannung abnimmt.

In einer weiteren Ausführungsform können die Filteröffnungen im Querschnitt eine dreieckige Form, bevorzugt die eines gleichseitigen Dreiecks, aufweisen (Anspruch 12). Betrachtet man das Strömungsbild durch solch eine dreieckige Öffnung, so kann festgestellt werden, daß Teilchen, die sich mehr in den Ecken der Öffnung befinden, gegen viel größere Reibungskräfte ankämpfen müssen, als Strömungsteilchen, die sich mehr im mittleren Bereich der Öffnung befinden. Dies wird bei einem Dreieck insbesondere dadurch verstärkt, daß die Strömungsteilchen in den Ecken von zwei Seiten in einem relativ spitzen Winkel eingeengt werden. Hierdurch entstehen bei einem Durchtritt Verwirbelungen, die zu einer besonders feinen und cremigen Schaumbildung führen, die eine bei Kennern sehr beliebte, exzellente Ausbildung der Crema auf dem Espresso herbeiführen.

Als besonders einfaches Verfahren zur Herstellung von feinporigen Dauerfiltereinsätzen hat sich herausgestellt, wenn die Filtergrundplatte aus Metall besteht und durch elektrolytische Metallabscheidung oder Stanzen oder Ätzen hergestellt wird. Entsprechend der geforderten Genauigkeit, kann dann das entsprechende Verfahren gewählt werden, durch das sich z.B. auch die dreieckigen Filteröffnungen mit relativ geringem Aufwand und mit ziemlich genauen Abmaßen herstellen lassen.

In einer weiteren bevorzugten Ausführungsform können die Filteröffnungen im Querschnitt eine Kreisform aufweisen (Anspruch 13), welche besonders einfach und formgenau hergestellt werden kann. Bei der Verwendung von solchen kreisförmigen Filteröffnungen kann der Durchmesser der Filteröffnungen an der Oberseite der Filtergrundplatte 100 bis 300 µm, bevorzugt 200 µm, betragen. Innerhalb dieses Durchmesserbereichs wird eine optimale Filterwirkung erreicht.

Es hat sich auch als besonders strömungsgünstig und damit zur Unterstützung des Ausbildens einer gewünschten Crema eine Ausbildung der Metallscheibe herausgestellt, bei der sich die Öffnungen von der Oberseite der Filtergrundplatte in Strömungsrichtung zur Unterseite der Filtergrundplatte trichterförmig erweitern. Weiterhin ist es hierbei dann besonders günstig, wenn die Seitenflächen der Filteröffnungen bogenförmig gekrümmt ausgebildet sind und somit einen günstigen düsenartigen Aufbau erlangen. Dadurch wird gleichzeitig ein Verstopfen der Filteröffnungen vermieden.

Durch die Merkmale des Patentanspruchs 14 ergibt sich in der Druckkammer ein Kanalsystem, durch das das Espressogetränk zu dem den Strömungswiderstand erhöhenden Mittel, nämlich die Öffnung, geleitet wird. Bei dem Weg des Espressogetränks durch die Sieblöcher der Filtergrundplatte wird in dem Bereich, wo diese an der Stirnseite der Aufnahmekanäle anliegen, keine Flüssigkeit in den Kanal geleitet, sondern nur an den Stellen, wo die Aufnahmekanäle direkt mit den Sieblöchern verbunden sind. Hierdurch entsteht einerseits ein erhöhter Druck am Sieb und andererseits wird die Flüssigkeit in den Aufnahmekanälen gesammelt, vermischt und der Öffnung gezielt zugeführt, was eine Cremaverbesserung mit sich bringt.

Im folgenden werden zwei Ausführungsbeispiele der vorliegenden Erfindung anhand von Zeichnungen näher erläutert. Es zeigen:
- Fig. 1: ein erstes Ausführungsbeispiel eines erfindungsgemäßen topfförmigen ersten Dauerfiltereinsatzes im Vollschnitt mit angedeuteter Auflagestelle und Metallscheibe für die Öffnung am Auslaß der Druckkammer,
- Fig. 2: einen Topfboden gemäß Fig. 1 in einer Draufsicht (die Filteröffnungen wurden zur Vereinfachung weggelassen),
- Fig. 3: eine Filtergrundplatte für den in Fig. 1 gezeigten Dauerfiltereinsatz mit einer ersten Variante von Halteöffnungen,
- Fig. 4: die Filtergrundplatte aus Fig. 3 in einer Seitenansicht,
- Fig. 5: den Ausschnitt V aus Fig. 4 in vergrößerter Darstellung,
- Fig. 6: eine Metallscheibe für den Dauerfiltereinsatz aus Fig. 1 in einer vergrößerten Darstellung,
- Fig. 7: eine Verbindungsstelle zwischen Filtergrundplatte und Topfwandung in vergrößerter Darstellung,
- Fig. 8a: eine zweite Variante von Verankerungsöffnungen,
- Fig. 8b: eine dritte Variante von Verankerungsöffnungen und
- Fig. 9: ein zweites Ausführungsbeispiel eines erfindungsgemäßen topfförmigen zweiten Dauerfiltereinsatzes im Teilschnitt mit Siebblech als Metallscheibe, deren Öffnungen den Auslaß der Druckkammer bilden.

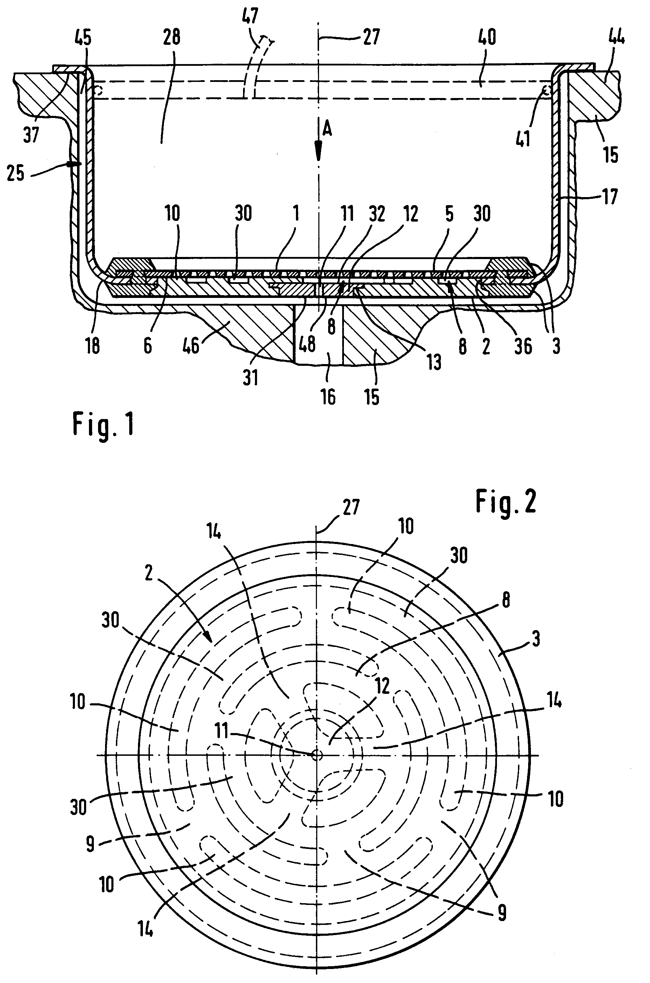

Die in Fig. 1, 2 und 9 dargestellte Ausführungsform eines erfindungsgemäßen Dauerfiltereinsatzes 25 umfaßt im wesentlichen eine relativ dünne, kreisförmige Filtergrundplatte 1, eine unterhalb der Filtergrundplatte 1 angeordnete und diese tragende Trägerplatte 2, einen die Filtergrundplatte 1 und die Trägerplatte 2 umgebenden, ringförmigen Kunststoffrahmen 3 und eine am Kunststoffrahmen 3 angebrachte Topfwandung 17. Die Filtergrundplatte 1 ist im wesentlichen eben ausgebildet und weist viele Sieblöcher 4 (ca. 240) auf, die sich im wesentlichen in Fließrichtung A, wie insbesondere in den Figuren 1, 5 und 9 zu sehen ist, erstrecken. Die Sieblöcher 4 sind dabei vorteilhaft von der Oberseite 5 der Filtergrundplatte 1 in Fließrichtung A zur Unterseite 6 der Filtergrundplatte 1 trichterförmig erweitert. Die Seitenflächen 7 der Sieblöcher 4 sind bogenförmig gekrümmt ausgebildet.

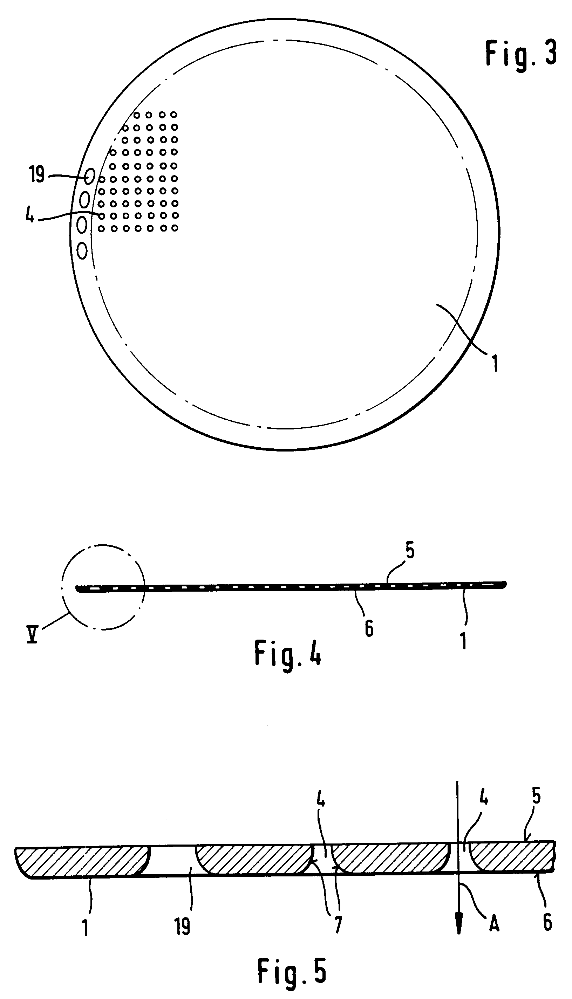

In die Filtergrundplatte 1 sind die Sieblöcher 4 im wesentlichen gleichmäßig verteilt eingebracht. Bevorzugt wird hierbei wie in Fig. 3 zu sehen ist, eine Spalten- bzw. Reihenanordnung gewählt. Die Sieblöcher 4 können im Querschnitt eine Kreisform aufweisen. Aber auch jede andere Form, wie Dreiecke, Vierecke, etc., ist einsetzbar. Des weiteren wird die Filtergrundplatte 1 vorzugsweise aus einem Edelmetall, beispielsweise nicht rostender Stahl, hergestellt, so daß sie auch durch elektrolytische Metallabscheidung, Stanzen oder Ätzen herstellbar ist.

Die Trägerplatte 2 besteht nach den Figuren 1, 2, 7 und 9 bevorzugt aus Kunststoff und weist an ihrem Innenboden 26 eine Druckkammer 8 mit labyrinth- bzw. mäanderförmigen Aufnahmekanälen 30 auf, deren Hauptteil aus koaxial zueinander angeordneten kreisringförmigen Kanalabschnitten besteht, die durch Durchbrüche 9, die sich durch die die einzelnen Kanalabschnitte trennenden Stege 10 erstrecken, miteinander verbunden sind. Die Druckkammer 8 wird von der Filtergrundplatte 1, der Trägerplatte 2 und dem diese Teile 1, 2 verbindenden Kunststoffrahmen 3 mit Kragen 18 gebildet. Die offene Druckkammer 8 besteht aus einem Raum, bei dem der Einlaß nur über die Filtergrundplatte 1 und der Auslaß nur über die Öffnung 11 erfolgt. Sie dient zum Sammeln des an der Filtergrundplatte 1 einfließenden Espressogetränks, von wo es dann zur zentralen Öffnung 11 weitergeleitet wird.

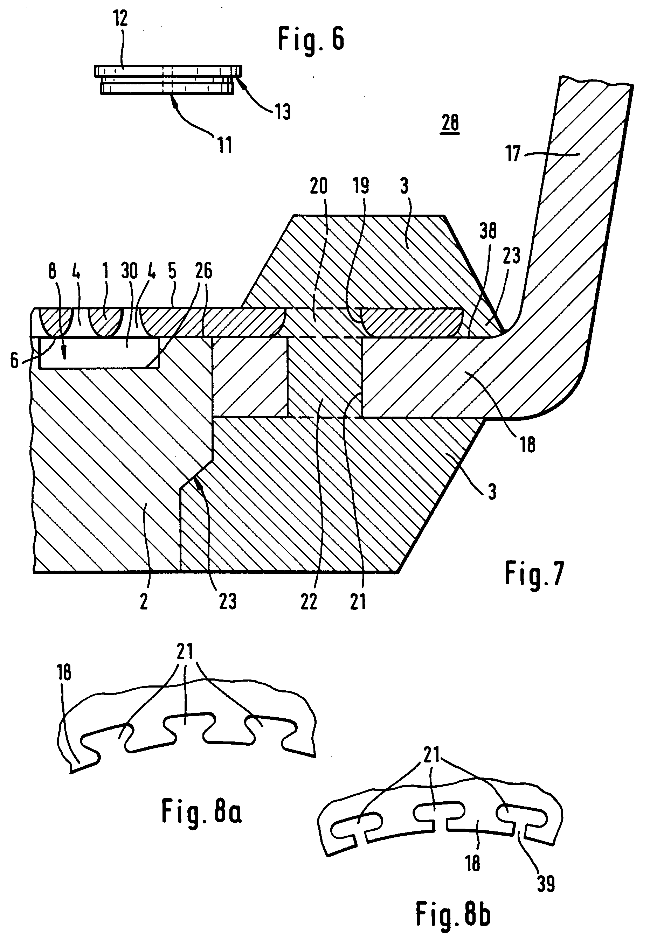

In der Mitte der Trägerplatte 2 befindet sich ein den Strömungswiderstand erhöhendes Mittel 11 in Form einer oder mehrerer Öffnungen. In den Figuren 1 und 2 besteht die Öffnung 11 aus einer einzigen Bohrung mit einem Querschnitt von 0,6 mm, die sich in einer Metallscheibe 12 befindet, welche wiederum von der aus Kunststoff bestehenden Trägerplatte 2 umspritzt ist. Die Bohrung 11 wird gebohrt oder erodiert, damit eine genauere Querschnittsfläche und scharfe Kanten am Übergang zu den Stirnflächen 31, 32 entstehen, was für eine gute Cremabildung sorgt. Zur besseren Verankerung weist die Metallscheibe 12, wie insbesondere in Fig. 6 zu sehen ist, einen am Außenumfang eingebrachten Ringbund 13 auf, den Material der Trägerplatte 2 umgibt. Hierdurch ist eine axiale wie radiale Sicherung der Metallscheibe 12 gewährleistet.

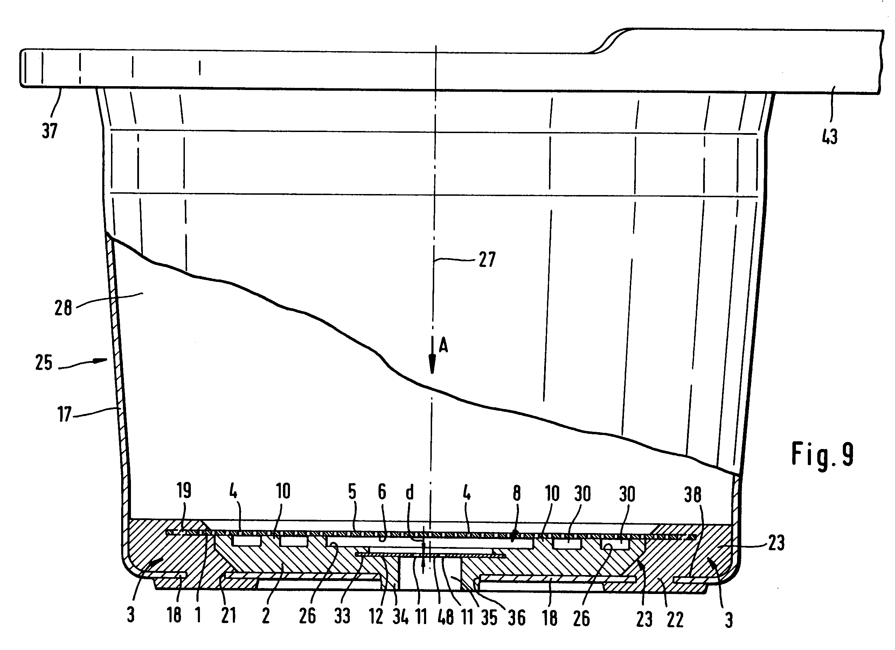

In Fig. 9 besteht die Metallscheibe 12 aus einem dünnen Siebblech mit einem oder mehreren Öffnungen 11, vorzugsweise 3 bis 6 Öffnungen, mit einem Gesamtquerschnitt von 0,6 mm². Die Blechdicke beträgt dabei etwa 0,2 bis 0,4 mm. Das Siebblech 12 wurde ebenfalls über seinen Rand 33 in die aus Kunststoff hergestellte Trägerplatte 2 bei deren Ausformung mit eingespritzt. An das Siebblech 12 schließt sich in Fließrichtung A an der Trägerplatte 2 ein Ringbund 34 mit einer Auslaßöffnung 35 an. Gegenüber Fig. 1 weist der Kragen 18 in Fig. 9 einen wesentlich kleineren Durchgang 36 auf, so daß der Kragen 18 die Trägerplatte 2 besser abstützt.

Die an die Metallscheibe 12 angrenzenden Aufnahmekanalabschnitte 14 verlaufen nach Fig. 2 im wesentlichen radial zur Achse der Öffnung 11, um so eine bessere zentrale Zuführung des Getränks zur Öffnung 11 zu erreichen. Der Aufnahmekanal 30 weist im wesentlichen eine Breite von 2,5 bis 5 mm auf, während die den Aufnahmekanal 30 zumindest bereichsweise umgrenzenden Stege 10 im wesentlichen eine Breite von 1,5 bis 3 mm, bevorzugt 2 mm, aufweisen. Hierdurch befindet sich unterhalb einer größtmöglichen Fläche der Filtergrundplatte 1 eine größtmögliche Fläche des Aufnahmekanals 30 bei noch stabilen Stegen 10. Die Tiefe des Aufnahmekanals 30 beträgt im wesentlichen 0,6 bis 1 mm, bevorzugt 0,8 mm. Der Durchmesser der Öffnung 11 der Austragsstelle weist im Durchmesser 0,4 bis 1 mm, bevorzugt 0,6 mm, auf. Die Sieblöcher 4 haben einen Durchmesser von 0,1 bis 0,3 mm, bevorzugt 0,2 mm. Da die Öffnung 11 wesentlich größer ist als die einzelnen Sieblöcher 4, wird es vermieden, daß der Dauerfiltereinsatz 25 verstopft wird.

Die Filtergrundplatte 1 und Trägerplatte 2 sind bei den dargestellten Ausführungsformen nach Figuren 1 und 9 kreisförmig ausgebildet und von einem gemeinsamen Kunststoffrahmen 3 umgeben. Das hat den Vorteil, daß die separat hergestellte Filtergrundplatte 1 und Trägerplatte 2 bei einem weiteren Fertigungsschritt in einer Spritzgußform mittels des Rahmens 3 aneinander gefügt werden können. Durch das separate Herstellen der Trägerplatte 2 können in deren später der Filtergrundplatte 1 zugewandten Innenboden 26 beliebig ausgeformte Aufnahmekanäle 30 eingebracht sein. Es kann aber auch nur zwischen beiden Teilen 2, 3 eine flache Druckkammer 8 ohne Kanäle 30 vorhanden sein.

Der Dauerfiltereinsatz 25 stützt sich in der Espressomaschine auf einem in Fig. 1 schematisch angedeuteten Ringbund 44 eines Siebkorbträgers 15 ab, der einen unter der Öffnung 11 angeordneten Auslaß 16 aufweist.

Die in den Figuren 1 und 9 gezeigten Ausführungsformen umfassen eine Topfwandung 17, die an ihrem unteren Randbereich den umlaufenden, zur Topfachse 27 weisenden Kragen 18 aufweisen. Der Kragen 18 greift in den Kunststoffrahmen 3 ein, wodurch die Topfwandung 17 an der Filtergrundplatte 1 und der Trägerplatte 2 durch Spritzgießen des Rahmens 3 in einem Arbeitsschritt angebracht werden kann. Hierzu weisen der Rahmen 3 und die Trägerplatte 2 einen gemeinsamen Durchgang 36 als Zentrierbereich auf, der für eine paßgenaue und formschlüssige Verbindung sorgt. Die Topfwandung 17 und der Kragen 18 können aus Metall, bevorzugt Edelstahl, bestehen. Es ist jedoch auch eine nicht dargestellte Ausführungsform denkbar, bei der die Topfwandung 17, der Kragen 18 und der Rahmen 3 einteilig aus Kunststoff bestehend ausgebildet sind. Die genannten Bestandteile können dann in einem einzigen Spritzgußvorgang an die Filtergrundplatte 1 und die Trägerplatte 2 angespritzt werden.

Insbesondere in den Figuren 1, 7 und 9 ist zu sehen, daß im Randbereich der Filtergrundplatte 1 Halteöffnungen 19 angeordnet sind, in die Haltebereiche 20 des Rahmens 3 paßgenau eingreifen. Die Halteöffnungen 19 und im Kragen 18 angeordnete Verankerungsöffnungen 21 sind in Form eines umlaufenden Lochkranzes entsprechend in den Randbereich der Filtergrundplatte 1 und des inneren Randbereichs des Kragens 18 eingebracht. In den Fig. 1 und 7 ist zu erkennen, daß die Halteöffnungen 19 der Filtergrundplatte 1 und die Verankerungsöffnungen 21 des Kragens 18 zumindest teilweise im wesentlichen zueinander fluchtend angeordnet sind. Selbst wenn durch eine ungleiche Teilung nur bestimmte Halteöffnungen 19 und Verankerungsöffnungen 21 übereinanderliegen, reicht dies zu einer guten Befestigung der Filtergrundplatte 1 und des Kragens 18 im Rahmen 3 aus. Um eine dichte Verbindung zwischen Filtergrundplatte 1, Trägerplatte 2 und Kragen 18 zur Bildung der Druckkammer 8 herzustellen, umschließt der Kunststoffrahmen 3 mit seinem äußeren Abschnitt 23 den radial äußeren Rand der Filtergrundplatte 1 und liegt dichtend an der Oberseite 38 des Kragens 18 an.

Die Figuren 8a und 8b zeigen weiterhin eine Variante von Verankerungsöffnungen 21, die aber auch ohne weiteres auf die Halteöffnungen 19 der Filtergrundplatte 1 übertragbar sind. Die Verankerungsöffnungen 21 sind entsprechend zum inneren Rand des Kragen 18 hin offen ausgebildet. Die Halteöffnungen 19 wären dann entsprechend zum Rand der Filtergrundplatte 1 hin offen ausgebildet. Mit dieser Ausgestaltung können sich Kragen 18 und Filtergrundplatte 1 noch besser im Kunststoffrahmen 3 verhaken. Eine bevorzugte Länge von Halte- und Verankerungsöffnungen 19, 21 kann im Bereich von 2 bis 4 mm, bei einem jeweiligen Abstand zum Rand und zueinander im Bereich von 1,5 bis 2 mm, betragen. Die Breite der Schlitze 39 in Fig. 8b können bevorzugt 1 bis 1,5 mm bemessen.

In Fig. 9 ist noch am oberen Rand des Ringbundes 37 zur besseren Handhabung des Dauerfiltereinsatzes 25 ein Handgriff 43 (nur teilweise dargestellt) angebracht.

Im folgenden wird die Wirkungs- und Funktionsweise der vorliegenden Erfindung kurz erläutert.

Nach dem der erfindungsgemäße Dauerfiltereinsatz 25 nach der ersten Ausführungsform gemäß Fig. 1 in den Aufnahmeraum 45 (nur teilweise dargestellt) eingesetzt ist, liegt die Unterseite des Ringbundes 37 an einem entsprechend ausgebildeten Ringbund 44 des Siebkorbträgers 15 an, so daß sich dieser dort abstützt. Der Boden 46 des Siebkorbträgers 15 weist daher einen geringen Abstand zur Trägerplatte 2 auf. Der Siebkorbträger 15 ist in der Regel mit einem Handgriff (nicht dargestellt) zur besseren Handhabung versehen. Bei den in den Figuren 1 bis 9 dargestellten Dauerfiltereinsätzen ist der Siebkorbträger 15 schwenkbar am Gehäuse einer Espressomaschine angeordnet.

Nachdem die Brühkammer 28 des Dauerfiltereinsatzes 25 mit Kaffeemehl (nicht dargestellt) befüllt wurde, was sowohl bei herausgenommenem Dauerfiltereinsatz 25 wie bei im Siebkorbträger 15 eingesetztem Dauerfiltereinsatz 25 erfolgen kann, wird der Siebkorbträger 15 mit samt dem Dauerfiltereinsatz 25 in seine Betriebsstellung in der Espressomaschine gebracht. Nunmehr wird über eine in der Espressomaschine ausgebildete Betätigungsvorrichtung der Kolben 40 in die Brühkammer 28 eingefahren, so daß der am Kolben befestigte Dichtring 41 dichtend mit der Topfwandung 17 in Eingriff steht. Die Brühkammer 28 ist geschlossen und es kann nunmehr heißes Wasser über die Zuführleitung 47 (gestrichelt dargestellt) in die Brühkammer 28 unter Druck eingespritzt werden. An dieser Stelle sei noch erwähnt, daß die Zuführleitung 47 mit einem Wassererhitzer und einer Druckpumpe (nicht dargestellt) verbunden ist. Das unter Druck in die Brühkammer 28 einfließende Heißwasser vermischt sich mit dem Kaffeemehl und extrahiert aus diesem die für ein Kaffee- bzw. Espressogetränk erforderlichen Aroma- und Geschmacksstoffe. Dabei fällt der Druck in Fließrichtung A bis zur Filtergrundplatte 1 ab, da das Kaffeemehl dem erhitzten Wasser einen gewissen Strömungswiderstand entgegensetzt. Die mit feinen Sieblöchern 4 versehene Filtergrundplatte 1 hält beim Durchfließen des Espressogetränks das Espressomehl in der Brühkammer 28 zurück. Über die Sieblöcher 4 gelangt das Espressogetränk in die zwischen Trägerplatte 2 und Filtergrundplatte 1 ausgebildete Druckkammer 8, von wo es noch unter gewissem Druck der Öffnung 11 zugeführt wird. Beim Durchfließen des Espressogetränks durch die Öffnung 11 erhöht sich einerseits die Strömungsgeschwindigkeit des Espressogetränks und andererseits wird ein schlagartiger Druckabfall von der Druckkammer 8 zur Außenseite 48 erreicht, wodurch das Espressogetränk in gewissem Grade aufschäumt und das Crema entstehen läßt. Nach Austritt aus der Öffnung 11 fließt dann das Espressogetränk mit Cremaanteilen über den am Boden 46 des Siebkorbträgers 15 ausgebildeten Auslaß 16, von wo es in eine unterhalb des Auslasses 16 ausgebildete Espressotasse oder sonst ein Gefäß (nicht dargestellt) abfließen kann. Beim Durchfließen des Espressogetränks durch die Druckkammer 8 dient diese zur Aufrechterhaltung des Druckes des Espressogetränks, da über die Sieblöcher 4 mehr Espressogetränk in die Druckkammer 8 einfließen, wie an der Öffnung 11 abfließen kann.

Der Dauerfiltereinsatz 25 nach Fig. 9 weist anstelle einer Metallscheibe 12, in der die Öffnung 11 nach Fig. 1 ausgebildet ist, ein dünnes Siebblech auf, das mit einigen Öffnungen 11 versehen ist. Die Summe des Gesamtquerschnittes der Öffnungen 11 nach Fig. 9 entspricht etwa dem Querschnitt der einzigen Öffnung 11 in Fig. 1. Mit Hilfe des Siebbleches 12 wird die Cremabildung noch erhöht, da aufgrund der verhältnismäßig dünnen Metallfolie 12 eine hohe Geschwindigkeit und ein hoher Druckabfall des Espressogetränks in kürzester Zeit erfolgt. Gerade diese Eigenschaften führen erfindungsgemäß zu einer vermehrten Cremabildung des Espressogetränks. Bei normalem Füllgrad der Brühkammer 28 mit Espressomehl, bei normalem Mahl- und Stopfgrad ergeben sich besonders gute Cremawerte, wenn dabei eine Wassertemperatur von etwa 94° C, ein Pumpendruck von ca. 10 bar und ein Gesamtquerschnitt der Öffnung bzw. Öffnungen 11 von ca. 0,4 bis 0,6 mm² eingehalten wird. Nach dem Brühvorgang wird dann der Kolben 40 aus der Brühkammer 28 nach oben herausgefahren und der Siebkorbträger 15 kann mit dem Dauerfiltereinsatz 25 von der Espressomaschine entfernt bzw. aus dieser herausgeschwenkt werden. Nunmehr kann der Dauerfiltereinsatz 25 aus dem Siebkorbträger 15 mittels des Handgriffs 43 zum Zwecke der Reinigung entfernt werden. Bei einer Ausführungsform, bei der der Dauerfiltereinsatz 25 mit leichtem Preßsitz in dem Aufnahmeraum 45 befestigt ist, kann auch dieser im Siebkorbträger 15 verbleiben, so daß die Reinigung zusammen mit dem Siebkorbträger erfolgt, der dann vorteilhafterweise einen Handgriff (nicht dargestellt) aufweist.

Wie aus den Figuren 1 und 9 ersichtlich ist, sind in der Druckkammer 8 Aufnahmekanäle 30 ausgebildet, die ein gezieltes Zuführen des Espressogetränks zur zentral am Dauerfiltereinsatz 25 ausgebildeten Öffnung 11 ermöglichen. Die Aufnahmekanäle 30 dienen gleichzeitig als Abstützfläche für die Filtergrundplatte 1, so daß diese von Durchbiegungen im Betrieb weitgehendst verschont bleibt. In Fig. 9 schließt sich an das Siebblech 12 in Fließrichtung A die Auslaßöffnung 35 an, die Bestandteil der Trägerplatte 2 ist und deren Durchmesser ein Vielfaches des Gesamtquerschnittes der Öffnungen 11 ist, damit ein ungehindertes Abfließen und kein weiterer Stau dem Espressogetränk entgegensteht. Das an der Auslaßöffnung 35 abfließende Kaffeegetränk wird dann, wie dies die Fig. 1 zeigt, dem im Siebkorbträger 15 ausgebildeten Auslaß 16 zugeführt, der in der Regel aus zwei nebeneinander angeordneten Ablässen besteht. Dies ermöglicht das Befüllen von zwei Espressotassen zur gleichen Zeit. Die kompakte Bauweise des erfindungsgemäßen Dauerfiltereinsatzes 25 ermöglicht eine einfache Handhabung bei guter Cremabildung.

## Patentansprüche

1. Topfförmiger, das Espressomehl in einer Brühkammer (28) aufnehmender Dauerfiltereinsatz (25) für eine Haushaltsespressomaschine, der an seinem Boden eine siebförmige Filtergrundplatte (1) mit Sieblöchern (4) aufweist, der in einem Siebkorbträger (15) einsetzbar ist, aus welchem das Espressogetränk über die Sieblöcher (4) abfließen kann und mit einer in Fließrichtung (A) des Espressogetränkes der Filtergrundplatte (1) nachgeschalteten Trägerplatte (2), die mit der Filtergrundplatte (1) zur besseren Cremaerzeugung eine Druckkammer (8) bildet, durch die das Espressogetränk hindurchfließen muß, bevor es am Siebkorbträger (15) austreten kann, wobei die Druckerzeugung in der Druckkammer (8) durch ein an ihrem Ausgang angebrachtes, den Strömungswiderstand erhöhendes Mittel (11) bewirkt wird,
**dadurch gekennzeichnet**,
daß die Druckkammer (8) und der Dauerfiltereinsatz (25) mechanisch fest miteinander verbunden sind und daß das Mittel (11) zur Druckerzeugung aus einer oder mehreren Öffnungen besteht, deren Gesamtquerschnitt ausreichend klein gegenüber dem Gesamtquerschnitt der Sieblöcher (4) der Filtergrundplatte (1) des Dauerfiltereinsatzes (25) ist, um einen zur Cremaerzeugung ausreichenden Druckabfall in der oder den Öffnungen (11) zu erreichen.

2. Dauerfiltereinsatz nach Anspruch 1,
**dadurch gekennzeichnet**,
daß der Dauerfiltereinsatz (25) von einer die Brühkammer (28) bildenden, zylindrischen Topfwandung (17) gebildet wird, daß der untere Randbereich der Topfwandung (17) einen umlaufenden, zur Topfachse (27) weisenden Kragen (18) aufweist und daß die Filtergrundplatte (1) mit der Trägerplatte (2) am Kragen (18) abgestützt und an diesem befestigt sind.

3. Dauerfiltereinsatz nach Anspruch 2,
**dadurch gekennzeichnet**,
daß die Filtergrundplatte (1) und die Trägerplatte (2) durch Spritzgießen am Kragen (18) befestigt ist.

4. Dauerfiltereinsatz nach Anspruch 3,
**dadurch gekennzeichnet**,
daß die Trägerplatte (2) aus Kunststoff und die Filtergrundplatte (1) aus dünnem Edelstahlblech bestehen.

5. Dauerfiltereinsatz nach Anspruch 3,
**dadurch gekennzeichnet**,
daß die Filtergrundplatte (1) und die Trägerplatte (2) von einem diese halternden Kunststoffrahmen (3) umgeben sind, der die feste und dichte Verbindung zum Kragen (18) herstellt und der an diese Teile (2, 3) angespritzt ist.

6. Dauerfiltereinsatz nach Anspruch 4 oder 5,
**dadurch gekennzeichnet**,
daß im Randbereich der Filtergrundplatte (1) mindestens eine Halteöffnung (19) angeordnet ist, in die ein Haltebereich (20) des Rahmens (3) im wesentlichen paßgenau eingreift.

7. Dauerfiltereinsatz nach Anspruch 1,
**dadurch gekennzeichnet**,
daß die Topfwandung (17) und der Kragen (18) aus Metall, bevorzugt aus Edelstahl bestehen, wobei der Kragen (18) in den Kunststoffrahmen (3) eingreift.

8. Dauerfiltereinsatz nach Anspruch 1,
**dadurch gekennzeichnet**,
daß die Topfwandung (17), der Kragen (18) und der Rahmen (3) einteilig aus Kunststoff bestehend ausgebildet sind.

9. Dauerfiltereinsatz nach Anspruch 1,
**dadurch gekennzeichnet**,
daß in die Trägerplatte (2) eine Metallscheibe (12) eingesetzt ist und daß die Metallscheibe (12) aus einem Siebblech besteht.

10. Dauerfiltereinsatz nach Anspruch 1 oder 9,
**dadurch gekennzeichnet**,
daß die Summe der Fläche der Öffnung bzw. Öffnungen (11) nicht größer als 0,6 mm², vorzugsweise 0,4 mm², beträgt.

11. Dauerfiltereinsatz nach Anspruch 10,
**dadurch gekennzeichnet**,
daß das Siebblech eine Dicke von 0,2 bis 0,6 mm, vorzugsweise 0,4 mm aufweist.

12. Dauerfiltereinsatz nach Anspruch 9,
**dadurch gekennzeichnet**,
daß der oder die Öffnungen (11) im Querschnitt eine dreieckige Form, bevorzugt die eines gleichseitigen Dreiecks aufweisen.

13. Dauerfiltereinsatz nach Anspruch 9,
**dadurch gekennzeichnet**,
daß der oder die Öffnungen (11) im Querschnitt eine Kreisform aufweisen.

14. Dauerfiltereinsatz nach Anspruch 1,
**dadurch gekennzeichnet**,
daß im wesentlichen entlang der Unterseite (6) der Filtergrundplatte (1) mindestens ein labyrinth- bzw. mäanderförmiger Aufnahmekanal (30) zur Aufnahme und zum Weiterleiten des gefilterten Mediums zu dem gemeinsamen den Strömungswiderstand erhöhenden Mittel (11) angeordnet ist.

## Claims

1. A cup-shaped permanent filter element (25) for a domestic espresso maker, which receives the espresso grounds in a brewing chamber (28), has at its bottom a sieve-type filter base plate (1) provided with filter perforations (4), and is insertable into a filter basket holder (15) from which the espresso beverage is allowed to be discharged through the filter perforations (4), and with a supporting plate (2) mounted downstream of the filter base plate (1) as seen when looking in the direction of flow (A) of the espresso beverage, the supporting plate (2) combining with the filter base plate (1) to form a pressure chamber (8) for the purpose of improving the production of crema, the espresso beverage being required to flow through the pressure chamber before it is allowed to exit on the filter basket holder (15), with the generation of pressure in the pressure chamber (8) being effected by a means (11) mounted on the pressure chamber outlet and operating to increase the flow resistance, **characterized in that** the pressure
chamber (8) and the permanent filter element (25) are firmly connected with each other mechanically, and that the means (11) for the generation of pressure is comprised of one or several apertures whose overall cross-section is sufficiently small relative to the overall cross-section of the filter perforations (4) in the filter base plate (1) of the permanent filter element (25) to produce a pressure drop in the aperture(s) (11) sufficient for the production of crema.

2. The permanent filter element as claimed in claim 1,
**characterized in that** the permanent filter element (25) is formed by a cylindrical cup wall (17) providing the brewing chamber (28), that the lower peripheral area of the cup wall (17) includes a circumferential collar (18) extending in the direction of the cup axis (27), and that the filter base plate (1) and the supporting plate (2) are supported upon and secured to the collar (18).

3. The permanent filter element as claimed in claim 2,
**characterized in that** the filter base plate (1) and the supporting plate (2) are secured to the collar (18) by injection molding.

4. The permanent filter element as claimed in claim 3,
**characterized in that** the supporting plate (2) is fabricated from a plastic, and the filter base plate (1) is made of a thin sheet of high-grade steel.

5. The permanent filter element as claimed in claim 3,
**characterized in that** the filter base plate (1) and the supporting plate (2) are surrounded by a plastic frame member (3) serving a holding function, which establishes the firm and tight connection with the collar (18) and is injection-molded onto the parts (2, 3).

6. The permanent filter element as claimed in claim 4 or claim 5,
**characterized in that** at least one holding opening (19) is provided in the peripheral area of the filter base plate (1) for substantially snugly receiving therein a holding section (20) of the frame member (3).

7. The permanent filter element as claimed in claim 1,
**characterized in that** the cup wall (17) and the collar (18) are made of metal, preferably of high-grade steel, with the collar (18) engaging the plastic frame member (3).

8. The permanent filter element as claimed in claim 1,
**characterized in that** the cup wall (17), the collar (18) and the frame member (3) are integrally made of plastic.

9. The permanent filter element as claimed in claim 1,
**characterized in that** a metal disk (12) is inserted in the supporting plate (2), and that the metal disk (12) is a perforated sheet.

10. The permanent filter element as claimed in claim 1 or claim 9,
**characterized in that** the sum of the area of the aperture or apertures (11) is not greater than 0.6 mm², preferably 0.4 mm².

11. The permanent filter element as claimed in claim 10,
**characterized in that** the perforated sheet has a thickness of between 0.2 and 0.6 mm, preferably 0.4 mm.

12. The permanent filter element as claimed in claim 9,
**characterized in that** the aperture or apertures (11) is or are of a triangular cross-section, preferably representing an equilateral triangle.

13. The permanent filter element as claimed in claim 9,
**characterized in that** the aperture or apertures (11) is or are of a circular cross-section.

14. The permanent filter element as claimed in claim 1,
**characterized in that** essentially along the underside (6) of the filter base plate (1) there is arranged at least one labyrinth- or meander-shaped receiving channel (30) for receiving and conveying the filtered medium to the common means (11) operating to increase the flow resistance.

## Revendications

1. Porte-filtre permanent en forme de bol (25) pour une machine à café ménagère du type "espresso" comprenant une chambre collectrice d'infusion (28) destinée à contenir la mouture de café, dont le fond est pourvu d'une plaque de fond perforée (1) de trous de la passoire (4), qui peut être inséré dans une coupelle (15) à partir de laquelle l'espresso peut s'écouler à travers les trous de la passoire (4), et qui est pourvu, dans le sens de l'écoulement (A) de la boisson du type "espresso", d'une plaque de soutien (2) intercalée après la plaque de fond (1), la plaque de soutien formant, avec la plaque de fond (1), une chambre de compression (8) pour permettre une meilleure confection de mousse à travers laquelle la boisson du type espresso doit passer avant de sortir par la coupelle (15), la production de pression dans la chambre de compression (8) étant obtenue par un moyen (11) appliqué à la sortie qui produit une résistance hydraulique,
**caractérisé en ce que**
la chambre de compression (8) et le porte-filtre permanent (25) sont mécaniquement et étroitement liés et que le moyen (11) pour la production de pression consiste en une ou plusieurs ouvertures dont la section transversale complète est suffisamment petite par rapport à la section transversale des trous de la passoire (4) de la plaque de fond du filtre (1) du porte-filtre permanent (25) pour provoquer une chute de pression suffisante à l'intérieur de l'ouverture ou des ouvertures (11) pour la production de mousse.

2. Porte-filtre permanent selon la revendication 1
**caractérisé en ce que**
le porte-filtre permanent (25) est formé d'une paroi cylindrique en forme de bol (17) qui, à son tour, forme la chambre collectrice d'infusion (28), que la zone du bord inférieur de la paroi en forme de bol (17) est entourée d'un collet (18) dirigé vers l'axe du bol (27) et en ce que la plaque de fond du filtre (1) est soutenue au collet (18) par la plaque de soutien (2) et qu'elle y est fixée.

3. Porte-filtre permanent selon la revendication 2
**caractérisé en ce que**
la plaque de fond du filtre (1) et la plaque de soutien (2) sont fixées au collet (18) par moulage par injection.

4. Porte-filtre permanent selon la revendication 3
**caractérisé en ce que**
la plaque de soutien (2) est en matière plastique et que la plaque de fond du filtre (1) consiste en tôle d'acier spécial.

5. Porte-filtre selon la revendication 3
**caractérisé en ce que**
la plaque de fond du filtre (1) et la plaque de soutien (2) sont entourées d'un cadre en matière plastique (3) qui crée une liaison fixe et étanche avec le collet (18) qui est réuni à ces deux pièces (2,3) par moulage par injection.

6. Porte-filtre permanent selon la revendication 4 ou 5
**caractérisé en ce que**
la zone du bord de la plaque de fond (1) est pourvue d'au moins une ouverte de soutien (19) dans laquelle s'engrène précisément une zone de soutien (20) du cadre (3).

7. Porte-filtre permanent selon la revendication 1
**caractérisé en ce que**
la paroi du bol (17) et le collet (18) sont en métal, de préférence en métal précieux, le collet (18) s'engrènant dans le cadre en plastique (3).

8. Porte-filtre permanent selon la revendication 1
**caractérisé en ce que**
la paroi du bol (17), le collet (18) et le cadre (3) sont produits en matière plastique d'une seule pièce.

9. Porte-filtre permanent selon la revendication 1
**caractérisé en ce que**
dans la plaque de soutien (2) est insérée une plaque de métal (12) et que cette plaque de métal (12) consiste d'une plaque de métal criblée.

10. Porte-filtre selon la revendication 1 ou 9
**caractérisé en ce que**
la surface totale de l'ouverture ou des ouvertures (11) n'est pas supérieure à 0,6 mm², de préférence 0,4 mm².

11. Porte-filtre permanent selon la revendication 10
**caractérisé en ce que**
la plaque de métal criblée est d'une épaisseur de 0,2 à 0,6 mm, de préférence de 0,4 mm.

12. Porte-filtre permanent selon la revendication 9
**caractérisé en ce que**
que la section transversale de l'ouverture ou des ouvertures (11) a une forme triangulaire, de préférence la forme d'un triangle équilatéral.

13. Porte-filtre permanent selon la revendication 9
**caractérisé en ce que**
l'ouverture ou des ouvertures (11) ont une section transversale circulaire.

14. Porte-filtre permanent selon la revendication 1,
**caractérisé en ce qu'**
au moins un couloir d'accueil (30) à labyrinthe ou à méandres passe le long du côté inférieur (6) de la plaque de fond du filtre (1) disposé de manière à transmettre le produit filtré au moyen commun (11) qui produit la résistance hydraulique.
